# EUROPEAN PATENT SPECIFICATION

(11) **EP 2 916 208 B1**
(45) Date of publication and mention of the grant of the patent: **28.12.2016**
(21) Application number: 15158246.7
(22) Date of filing: 09.03.2015
(51) Int. Cl.: G06F 3/0484, G06F 3/0488, G06F 3/0481

(54) **Portable terminal and method of enlarging and displaying contents**
Tragbares Endgerät und Verfahren zur Vergrösserung und Anzeige von Inhalten
Terminal portable et procédé d'élargissement et d'affichage de contenu

(30) Priority: 07.03.2014 KR 20140027406
(43) Date of publication of application: 09.09.2015
(73) Proprietor: Samsung Electronics Co., Ltd, Gyeonggi-do 443-742 (KR)
(72) Inventor: Joo, Sun-Woong, 443-742 Gyeonggi-do (KR); Yun, Young-Soo, 443-742 Gyeonggi-do (KR)
(74) Representative: Nederlandsch Octrooibureau

(56) References cited:
- EP-A2- 2 202 748
- EP-A2- 2 568 437
- US-A1- 2004 012 621
- US-A1- 2009 267 907

## Description

### BACKGROUND

### 1. Field of the Invention

The present invention relates, generally to a portable terminal and method of enlarging and displaying contents of the portable terminal and, more particularly, to a portable terminal and method of enlarging and displaying a part of the contents of the portable terminal in response to a user's input.

### 2. Description of the Related Art

Contents may be displayed through a display unit of a portable terminal. The contents may include, for example, a video, an image, a text document, a web document, an application, a User Interface (UI), a broadcasting image based on broadcasting data received from transmission equipment of a broadcasting station, etc.

When the image or the web document is displayed, the portable terminal can enlarge and display the image or the web document. For example, the portable terminal can enlarge and display the image or the web document being displayed on the display unit, in response to a user's pinch-open gesture on the display unit. Further, the portable terminal can reduce and display the image or the web document being displayed on the display unit, in response to a user's pinch-close gesture on the display unit.

When contents are enlarged and displayed on a display unit of a portable terminal, a user may want to change an enlargement ratio of the contents. In this case, there is inconvenience in that the user must determine the enlargement ratio of the contents using a separate setting menu, and must enlarge the contents by performing another gesture. Accordingly, it is difficult to consistently maintain a user action that enlarges and views the contents.

Further, when contents which include motion, such as a video, are enlarged and displayed, the user may miss a target desired to be enlarged while performing a gesture. For example, when the user performs a pinch-open gesture on a display unit, a target to be enlarged may move to another location on the display unit, or may disappear from the display unit.

Thus, the user requires a method of intuitively changing the enlargement ratio of the contents and a method of enlarging the moving contents, such as a video, without missing the target desired to be enlarged.

US20090267907 discloses an information processing apparatus including a display module which comprises a touch sensor on a display surface, a detecting module which detects a range surrounded by a position where a user's finger touches the display surface of the display module, and a position where the user's finger takes off from the display surface after moving on the display surface while touching, and an enlargement display module which enlarges an object in the range on the display module while keeping the object in an operable status if the range is detected by the detecting module.

EP 2202748 relates to an image editing technology and an image reproducing technology, and it particularly relates to method and apparatus for editing images by generating moving images having a plurality of frame rates from a single moving image, and method and apparatus for reproducing the thus edited moving images.

### SUMMARY

The present invention has been made to address the above-mentioned problems and disadvantages, and to provide at least the advantages described below. Accordingly, an aspect of the present invention provides a portable terminal and method of enlarging and displaying contents.

In accordance with an aspect of the present invention, a method of enlarging and displaying contents of a portable terminal is provided as defined in claim 1.

In accordance with another aspect of the present invention, a portable terminal for enlarging and displaying contents is provided as defined in claim 7.

Further advantageous exemplary aspects are defined in the dependent claims.

### BRIEF DESCRIPTION OF THE DRAWINGS

The above and other aspects, features, and advantages of the present invention will be more apparent from the following detailed description, taken in conjunction with the accompanying drawings, in which:
FIG. 1 is a block diagram illustrating a configuration of a portable terminal according to an exemplary aspect of the present invention;
FIG. 2 is a block diagram illustrating a software configuration of a portable terminal according to an exemplary aspect of the present invention;
FIGs. 3A to 3C illustrate a process of enlarging and displaying contents according to an exemplary aspect of the present invention;
FIGs. 4A and 4B illustrate a process of reducing and displaying the enlarged contents according to an exemplary aspect of the present invention;
FIG. 5 illustrates a process of simultaneously enlarging and displaying a plurality of content areas according to an exemplary aspect of the present invention;
FIGs. 6A and 6B illustrate a process of increasing an enlargement magnification ratio of the contents according to an exemplary aspect of the present invention;
FIGs. 7A to 7B illustrate a process of enlarging contents according to an exemplary aspect of the present invention;
FIG. 8 is a flowchart illustrating a process of enlarging and displaying contents according to an exemplary aspect of the present invention;
FIG. 9 is a flowchart illustrating a process of enlarging and displaying contents according to an exemplary aspect of the present invention; and
FIG. 10 is a block diagram illustrating a configuration of a portable terminal according to an exemplary aspect of the present invention.

### DETAILED DESCRIPTION OF EXEMPLARY ASPECTSOF THE PRESENT INVENTION

Hereinafter, the detailed description according to the present invention will provide exemplary aspects to solve the technical problems identified above. Further, the same names of entities defined for the convenience of description of the present invention may be used. However, the names used for convenience of description do not limit a right according to the present invention, and may be applied to systems having a similar technical background equally or with minor modification.

For the same reason, in the accompanying drawings, some components may be exaggerated, omitted, or schematically illustrated, and a size of each component may not precisely reflect the actual size thereof. The present invention is not limited by the relative size or interval drawn in the accompanying drawings.

Further, the singular form used in the present invention is intended to include the plural form unless clearly indicated in the context. Further, the term "and" used in the present specification should be understood as indicating and including any and all possible combinations of one or more of the listed associated items.

Further, the terms "unit", "module", etc. used in the present disclosure imply a unit for performing at least one function or operation, which can be implemented by hardware, software, or a combination of hardware and software.

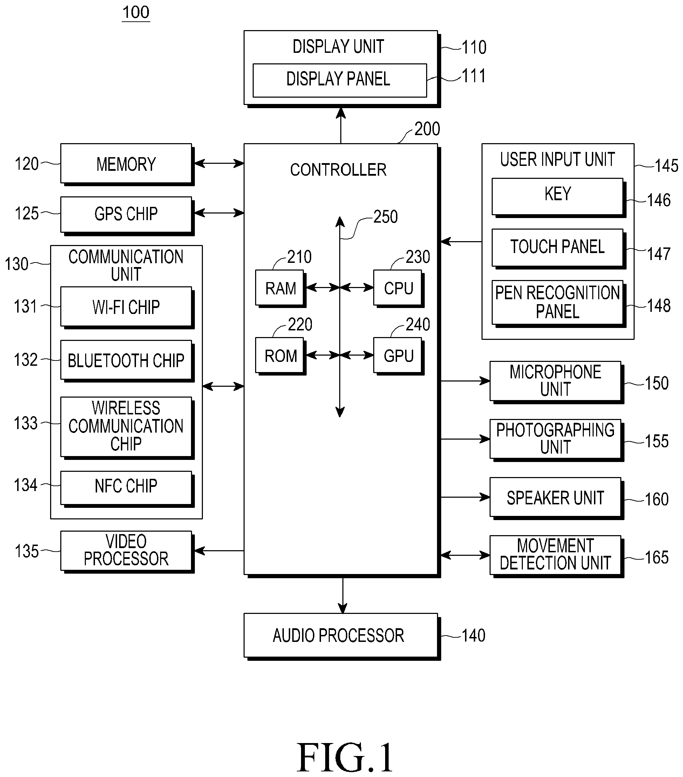

Hereinafter, the present invention will be described with reference to the accompanying drawings. FIG. 1 illustrates a block diagram illustrating a configuration of a portable terminal according to an exemplary aspect of the present invention.

A configuration of a portable terminal 100 of FIG. 1 may be applied to various types of apparatuses such as, for example, a mobile phone, a tablet, a Personal Computer (PC), a Personal Digital Assistant (PDA), a Moving Picture Expert Group Audio Layer III (MP3) player, a kiosk PC, an electronic picture frame, a navigation device, a wearable device such as a wrist watch or a Head-Mounted Display (HMD), etc.

Referring to FIG. 1, the portable terminal 100 includes a display unit 110, a controller 200, a memory 120, a Global Positioning System (GPS) chip 125, a communication unit 130, a video processor 135, an audio processor 140, a user input unit 145, a microphone unit 150, a photographing unit 155, a speaker unit 160, and a movement detection unit 165.

The display unit 110 includes a display panel 111 and a controller (not illustrated) for controlling the display panel 111. The display panel may be implemented by various types of displays such as a Liquid Crystal Display (LCD), an Organic Light Emitting Diode (OLED), an Active-Matrix Organic Light-Emitting Diode (AM-OLED), a Plasma Display Panel (PDP), etc. The display panel 111 may be implemented flexibly, transparently or wearably. The display unit 110 may be provided as a touch screen while being combined with a touch panel 147 of the user input unit 145. For example, the touch screen (not illustrated) may include an integrated module in which the display panel 111 and the touch panel 147 are combined in a laminated structure.

The memory 120 includes at least one of an internal memory and an external memory
The internal memory includes at least one of a volatile memory (e.g. a Dynamic Random Access Memory (DRAM), a Synchronous Dynamic RAM (SDRAM), etc.), a non-volatile memory (e.g. a One Time Programmable Read-Only Memory (OTPROM), a Programmable ROM (PROM), an Erasable and Programmable ROM (EPROM), an Electrically Erasable and Programmable ROM (EEPROM), a Mask ROM, a Flash ROM, etc.), a Hard Disk Drive (HDD), or a Solid State Drive (SSD).

According to an exemplary aspect of the present invention, the controller 200 can process a command or data received from at least one of the non-volatile memory and other components by loading the command or the data in the volatile memory. Further, the controller 200 may store the data received or generated from other components in the non-volatile memory.

The external memory may include at least one of, for example, a Compact Flash (CF), a Secure Digital (SD), a Micro Secure Digital (Micro-SD), a Mini Secure Digital (Mini-SD), an extreme Digital (xD) and a memory stick.

The memory 120 stores various programs and various pieces of data which are used for an operation of the portable terminal 100. For example, the memory 120 may temporarily or semipermanently store an electronic document written by a word processor or an electronic document received from an external server (not illustrated).

The controller 200 controls the display of an electronic document on the display unit 110 using the program and the data stored in the memory 120. In other words, the controller 200 displays an electronic document on the display unit 110 using the program and the data stored in the memory 120. Further, when a user gesture is performed on an area of the display unit 110, the controller 200 performs a control operation corresponding to the user gesture.

The controller 200 includes a RAM 210, a ROM 220, a Central Processing Unit (CPU) 230, a Graphic Processing Unit (GPU) 240, and a bus 250. The RAM 210, the ROM 220, the CPU 230, the GPU 240, etc. may be connected to each other through the bus 250.

The CPU 230 accesses the memory 120 to perform booting by using an Operating/System (O/ S) stored in the memory 120. Further, the CPU 230 perform various operations by using various programs, contents, data, etc. stored
in the memory 120.

The ROM 220 stores a command set, etc. for system booting. For example, when a turn-on command is input to the portable terminal 100 so that electrical power is supplied to the portable terminal 100, the CPU 230 copies, in the RAM 210, the O/S stored in the memory 120 according to a command stored in the ROM 220, and executes the O/S to boot the system. When the booting is completed, the CPU 230 copies various programs stored in the memory 120, in the RAM 210, and executes the program copied in the RAM 210 to perform various operations. When the booting of the portable terminal 100 is completed, the GPU 240 displays a User Interface (UI) screen on an area of the display unit 110. In detail, the GPU 240 generates a screen on which an electronic document including various objects such as contents, an icon, a menu, etc. is displayed. The GPU 240 calculates an attribute value such as coordinate values, a form, a size, a color, etc. through which each object is displayed according to a layout of the screen. Further, the GPU 240 generates a screen of various layouts including the objects based on the calculated attribute value. The screen generated by the GPU 240 is provided to the display unit 110 and is displayed on each area of the display unit 110.

The GPS chip 125 receives a GPS signal from a GPS satellite to calculate a current location of the portable terminal 100. The controller 200 calculates a user's location by using the GPS chip 125 when a navigation program is used or a current location of the user is required.

The communication unit 130 communicates with various types of external devices according to various types of communication schemes. The communication unit 130 includes at least one of a Wi-Fi chip 131, a Bluetooth chip 132, a wireless communication chip 133 and a Near Field Communication (NFC) chip 134. The controller 200 communicates with various types of external devices by using the communication unit 130.

The Wi-Fi chip 131 and the Bluetooth chip 132 communicate in a Wi-Fi scheme and a Bluetooth chip scheme, respectively. When the Wi-Fi chip 131 or the Bluetooth chip 132 is used, various types of connection information such as SubSystem IDentification (SSID), a session key, etc. are first transmitted and received, and after communication connection is performed using the transmitted and received connection information, various types of information may be transmitted and received. The wireless communication chip 133 is a chip which performs communication according to various communication standards such as the Institute of Electrical and Electronics Engineers (IEEE) communication standards, Zigbee, 3^{rd} Generation (3G), 3^{rd} Generation Partnership Project (3GPP), Long Term Evolution (LTE), etc. The NFC chip 134 is a chip which operates by an NFC scheme using a bandwidth of 13.56 MHz among various Radio Frequency IDentification (RF-ID) frequency bandwidths of 135 kHz, 13.56 MHz, 433 MHz, 860 - 960 MHz, 2.45 GHz, etc.

The video processor 135 processes contents received through the communication unit 130 or video data included in contents stored in the memory 120. The video processor 135 performs various image processes such as decoding, scaling, noise-filtering, frame rate conversion, resolution conversion, etc. for the video data. Further, when the received contents correspond to a broadcasting image, the video processor 135 processes the broadcasting image according to standards such as Digital Multimedia Broadcasting (DMB), Digital Video Broadcasting (DVB), media flow, etc.

The audio processor 140 processes contents received through the communication unit 130 or audio data included in contents stored in the memory 120. The audio processor 140 performs various processes such as decoding, amplifying, noise-filtering, etc. for the audio data.

When a reproduction program for multimedia contents is executed, the controller 200 drives the video processor 135 and the audio processor 140 to reproduce the corresponding contents. The speaker unit 160 outputs audio data generated by the audio processor 140.

The user input unit 145 receives various commands from a user. The user input unit 145 includes at least one of a key 146, a touch panel 147, and a pen recognition panel 148.

The key 146 includes various types of keys such as a mechanical button, a wheel, etc. which are formed on various areas such as a front surface, a side surface, a rear surface, etc. of an appearance of a main body of the portable terminal 100.

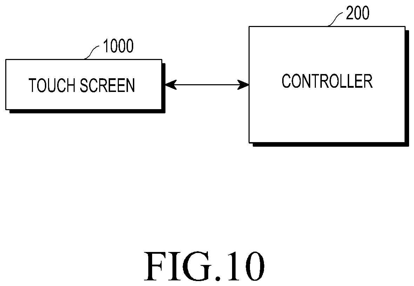

The touch panel 147 detects a touch input of a user, and outputs a touch event value corresponding to the detected touch signal. When the touch panel 147 configures a touch screen 1000 of FIG. 10 by being combined with the display panel 111, the touch screen 1000 may be implemented by various types of touch sensors using a capacitive scheme, a resistive scheme, a piezoelectric scheme, etc. The capacitive scheme corresponds to a scheme of calculating touch coordinates by detecting minute amounts of electrical energy caused by a body of a user when a part of the body of the user touches a surface of the touch screen 1000, while using a dielectric coated on the surface of the touch screen 1000. The resistive scheme corresponds to a scheme of calculating touch coordinates by detecting that upper and lower plates at touched points are in contact with each other so that a current flows when a user touches a screen, while including two electrode plates embedded in the touch screen. A touch event generated in the touch screen 1000 may be generated mainly by a finger of a human, but may also be generated by an object having a conductive material which can change a capacitance. The touch screen 1000 displays an object (e.g. a menu, a text, an image, a video, a figure, an icon, a short-cut icon, etc.) as a UI. A user may perform a user input by touching an object displayed on the touch screen 1000 through the body (e.g. a finger) of the user or a separate pointing device such as a stylus pen.

The touch according to an exemplary aspect of the present invention is not limited to a contact between the touch screen 1000 and the body of the user or the touchable pointing device, and may include a non-contact (e.g. hovering) in which a detectable interval between the touch screen 1000 and the body of the user or between the touch screen 1000 and the pointing device is lower than 30 mm. It can be understood by those skilled in the art that the detectable non-contact interval in the touch screen 1000 can be changed according to a performance or a structure of the portable terminal 100.

The pen recognition panel 148 detects a proximity input or a touch input of a pen according to an operation of a touch pen (e.g. a stylus pen and a digitizer pen) of a user, and outputs the detected pen proximity event or the pen touch event. The pen recognition panel 148 may be implemented by an ElectroMagnetic Resonance (EMR) scheme, and detects a touch or a proximity input according to a proximity of a pen or an intensity change in an electromagnetic field caused by a touch. In detail, the pen recognition panel 148 includes an electromagnetic induction coil sensor having a grid structure and an electromagnetic signal processing unit for sequentially providing an alternating signal having a predetermined frequency to each loop coil of the electromagnetic induction coil sensor. When a pen in which a resonant circuit is embedded is located in the vicinity of the loop coils of such a pen recognition panel 148, a magnetic field transmitted from the corresponding loop coil generates a current based on mutual electromagnetic induction of the resonant circuits within the pen. Based on the current, the induced magnetic field is generated from the coil constituting the resonant circuit within the pen, and the pen recognition panel 148 detects the induced magnetic field from the loop coil in a signal reception state so as to detect a proximity location or a touch location of the pen. The pen recognition panel 148 may be provided while having a predetermined area at a lower portion of the display panel 111, for example, an area which can cover a display area of the display panel 111.

The microphone unit 150 receives an input of a user's voice or other sound and converts the received input into audio data. The controller 200 may use the user's voice input through the microphone unit 150 at a voice call operation, or may convert the user's voice into audio data and store the converted audio data in the memory 120.

The photographing unit 155 photographs a still image or a moving image under control of a user. A plurality of photographing units 155 may be implemented as being a front camera and a rear camera.

When the photographing unit 155 and the microphone unit 150 are provided, the controller 200 performs a control operation according to the user's voice input through the microphone unit 150 or a user's motion recognized by the photographing unit 155. For example, the portable terminal 100 may operate in a motion control mode or a voice control mode. When the portable terminal 100 operates in the motion control mode, the controller 200 photographs a user by activating the photographing unit 155, and tracks a change in the user's motion to perform a control operation corresponding to the tracked change. When the portable terminal 100 operates in the voice control mode, the controller 200 analyzes the user's voice input through the microphone unit 150, and operates in a voice recognition mode which performs a control operation according to the analyzed user's voice.

The movement detection unit 165 detects a movement of a main body of the portable terminal 100. The portable terminal 100 may be rotated or inclined in various directions. The movement detection unit 165 detects a movement characteristic such as a rotation direction, a rotation angle, an inclination, etc. by using at least one of various sensors such as a geomagnetic sensor, a gyro sensor, an acceleration sensor, etc.

In addition, although not illustrated in FIG. 1, in the exemplary aspect of the present invention, the portable terminal 100 may further include various external input ports, to which various external terminals such as a Universal Series Bus (USB) port to which a USB connector may be connected, a headset, a mouse, a
Local Area Network (LAN), etc. are connected, a DMB chip for receiving and processing a DMB signal, various sensors, etc.

The names of the components of the aforementioned portable terminal 100 may be changed. Further, the portable terminal 100 according to the present invention may be configured by including at least one of the aforementioned components, and may be configured by omitting some components or by further including additional other components.

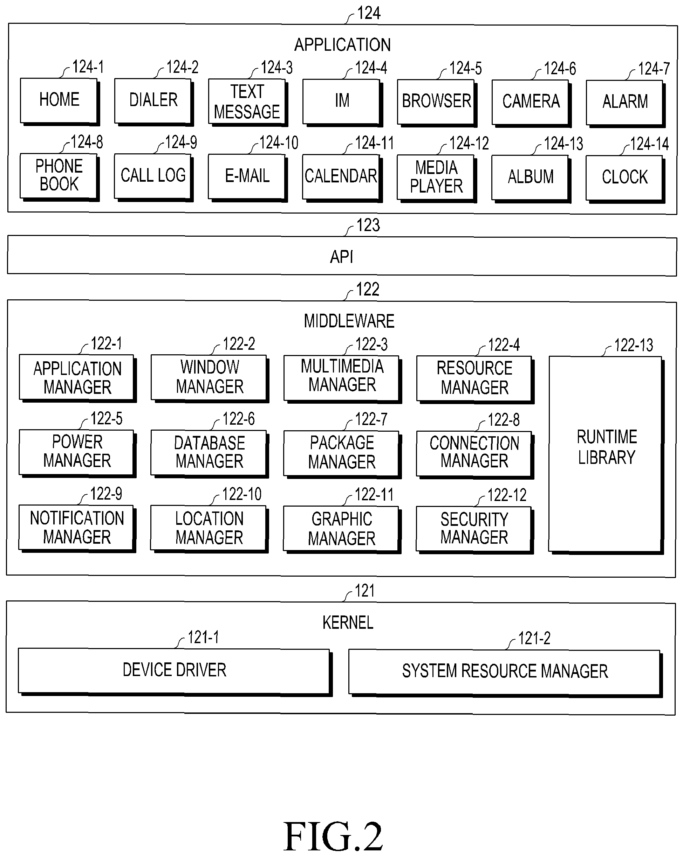

FIG. 2 is a block diagram illustrating a software configuration of a portable terminal according to an exemplary aspect of the present invention.

According to FIG.1, the memory 120 stores an OS for controlling a resource of the portable terminal 100, an application program for operating an application, etc. The OS may include a kernel, middleware, an Application Program Interface (API), etc. Android, iOS, Windows, Symbian, Tizen, Bada etc. are examples of possible OSs.

Referring to FIG. 2, the kernel 121 includes at least one of a device driver 121-1 or a system resource manager 121-2 which manages resources. The device driver 121-1 controls hardware of the portable terminal 100 through software approaches. To this end, the device driver 121-1 may be divided into an interface and an individual driver module which is provided by a hardware vendor. The device driver 121-1 includes at least one of, for example, a display driver, a camera driver, a Bluetooth driver, a share memory driver, a USB driver, a keypad driver, a Wi-Fi driver, an audio driver or an Inter-Process Communication (IPC) driver. The system resource manager 121-2 includes at least one of a process management unit, a memory management unit or a file system management unit. The system resource manager 121-2 performs functions such as control, allocation, recovery, etc. of system resources.

The middleware 122 includes a plurality of modules which have been previously implemented in order to provide functions commonly required by various applications. The middleware 122 provides functions through the API 123 such that the application 124 may efficiently use internal resources of the portable terminal 100. The middleware 122 includes at least one of the plurality of modules such as an application manager 122-1, a window manager 122-2, a multimedia manager 122-3, a resource manager 122-4, a power manager 122-5, a database manager 122-6, a package manager 122-7, a connection manager 122-8, a notification manager 122-9, a location manager 122-10, a graphic manager 122-11, a security manager 122-12, etc.

The application manager 122-1 manages a life cycle of at least one of the applications 124. The window manager 122-2 manages Graphical User Interface (GUI) resources used on a screen. The multimedia manager 122-3 identifies formats required for reproduction of various media files, and performs encoding or decoding of a media file by using a COder/DECoder (CODEC) suitable for the corresponding format. The resource manager 122-4 manages resources such as source code, a memory, and a storage space of at least one of the applications 124. The power manager 122-5 manages a battery or a power source and provides electric power information on an operation, etc., while operating with a Basic Input/Output System (BIOS). The database manager 122-6 generates, searches or changes a database to be used in at least one of the applications 124. The package manager 122-7 manages installation or an update of an application distributed in a form of a package file. The connection manager 122-8 manages wireless communication such as Wi-Fi, Bluetooth, etc. The notification manager 122-9 displays or notifies a user of an event such as an arrival message, promise, proximity notification, etc. in such a manner that does not disturb the user. The location manager 122-10 manages location information of the portable terminal 100. The graphic manager 122-11 manages a graphic effect to be provided to a user and a UI relating to the graphic effect. The security manager 122-12 provides every security function required for system security or user authentication. When the portable terminal 100 of a user includes a voice call function, the middleware 122 further includes a voice call manager (not illustrated) for managing a function of a voice call or a video call of the user.

The middleware 122 further includes a runtime library 122-13 or other library modules. The runtime library 122-13 corresponds to a library module which a compiler uses in order to add a new function through a programming language while an application is executed. For example, the runtime library 122-13 may perform input/output, memory management, a function for an arithmetic function, etc. The middleware 122 may generate and use a new middleware module through various functional combinations of the aforementioned internal component modules. The middleware 122 may provide modules specialized according to types of operating systems in order to provide differentiated functions. The middleware 122 may dynamically eliminate a part of existing components or add a new component. A part of components disclosed in an exemplary aspect of the present invention may be omitted, another component may be further provided, or an existing component may be substituted for another component having a different name and performing a similar function.

The API 123 corresponds to an aggregation of API programming functions, and has a different configuration according to the OS. When the OS corresponds to Android or iOS, for example, one API set may be provided for each platform, and when the OS corresponds to Tizen, for example, two or more API sets may be provided.

The application 124 includes a preloaded application which is basically installed, and a third party application which a user can install and use while using the portable terminal 100. The application 124 includes at least one of, for example, a home application 124-1 for returning to a home screen, a dialer application 124-2 for performing a phone call with the other person, a text message application 124-3 for receiving a message from the other person identified through a phone number, an Instant Message (IM) application 124-4, a browser application 124-5, a camera application 124-6, an alarm application 124-7, a phone-book application 124-8 for managing phone numbers or addresses of the other persons, a call log application 124-9 for managing a phone call log, a text message reception/transmission log or a missed call log of a user, an E-mail application 124-10 for receiving a message from the other person identified through an E-mail, a calendar application 124-11, a media player application 124-12, an album application 124-13 or a clock application 124-14. The names of the aforementioned components of the software according to the present invention may be changed according to a type of the OS. Further, the software according to the present invention may include one or more of the aforementioned components or may further include other additional components, or some of the aforementioned components may be omitted.

The controller 200 of FIG. 1 may support various user interactions according to the aforementioned exemplary aspect. Hereinafter, a user interaction method according to various exemplary aspects of the present invention will be described in detail.

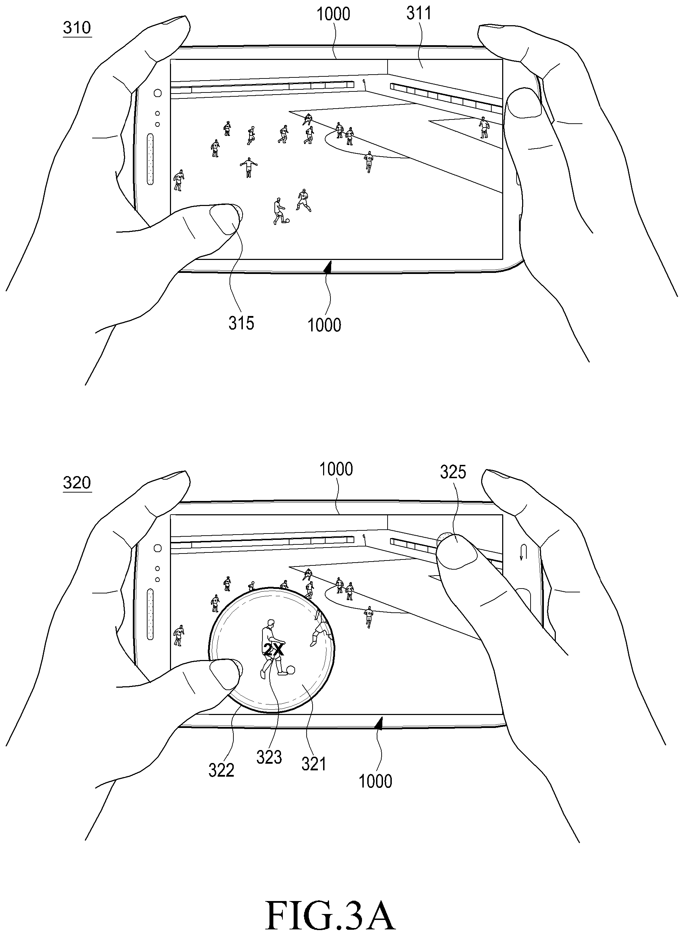

FIGs. 3A to 3C illustrate a process of enlarging and displaying contents according to an exemplary aspect of the present invention.

Referring to an image 310 of FIG. 3A, the controller 200 may display contents 311 on a touch screen 1000._For example, the controller 200 may display a broadcasting image 311 on the touch screen 1000.

The controller 200 receives an input signal to enlarge a part of the contents. The input signal may correspond to, for example, a signal generated in the touch panel 147 in response to a user's touch gesture 315 in a part of the contents displayed on the touch screen 1000.

Referring to an image 320 of FIG. 3A, the controller 200 displays a first magnifying glass 322 on the touch screen 1000, in response to the input signal to enlarge a part of the contents. A part 321 of the contents which is enlarged by a first magnification ratio (e.g. two times) is displayed in the first magnifying glass 322. Information 323 at the first magnification ratio is also displayed in the first magnifying glass 322. The information 323 at the first magnification ratio may be continuously displayed while the first magnifying glass 322 is displayed, or may automatically disappear after a predetermined time period (e.g. 1.5 seconds to 2 seconds). The information 323 at the first magnification ratio may be displayed with a transparent effect, an opaque effect or a flickering effect. Further, the information 323 at the first magnification ratio may be displayed in the vicinity of the outside of the first magnifying glass 322 or at edges of the first magnifying glass 322, as well as within the first magnifying glass 322.

In an exemplary aspect of the present invention, a size and a location of the first magnifying glass 322 displayed on the touch screen 1000 may be determined in consideration of a point where the user's touch gesture 315 is touched on the touch screen 1000. For example, the first magnifying glass may have a predetermined size in a direction from the touched point to a center of the screen. A diameter of the first magnifying glass 322 may be, for example, a third to a fourth of a diagonal direction of the touch screen 1000. Here, the size of the first magnifying glass 322 may be adjusted by a user through a separate menu, etc.

In another embodiment of the present invention, the controller 200 may change a reproduction speed of the contents 321 included in the first magnifying glass 322, in response to an input signal to enlarge a part of the contents. For example, the controller 200 may change a reproduction speed of the contents 321 displayed within the first magnifying glass 322 to be a first speed (e.g. 0.5x speed) which is different from an existing speed while a reproduction speed of contents displayed outside the first magnifying glass 322 is maintained to be the existing speed. Otherwise, the controller 200 may change the reproduction speeds of both of the contents displayed outside the first magnifying glass 322
and the contents 321 displayed within the first magnifying glass 322 to be a second speed (e.g. 0.2x speed) which is different from the existing speed. Otherwise, the controller may change the reproduction speed of the contents displayed outside the first magnifying glass 322 to be the first speed (e.g. 0.5x speed) which is different from the existing speed, and may change the reproduction speed of the contents 321 displayed within the first magnifying glass 322 to be the second speed (e.g. 0.2x speed) which is different from the first speed.

Next, the controller 200 may receive an input signal to enlarge another part of the contents. The input signal may correspond to, for example, a signal generated in the touch panel 147 in response to a user's touch gesture 325 on the contents.

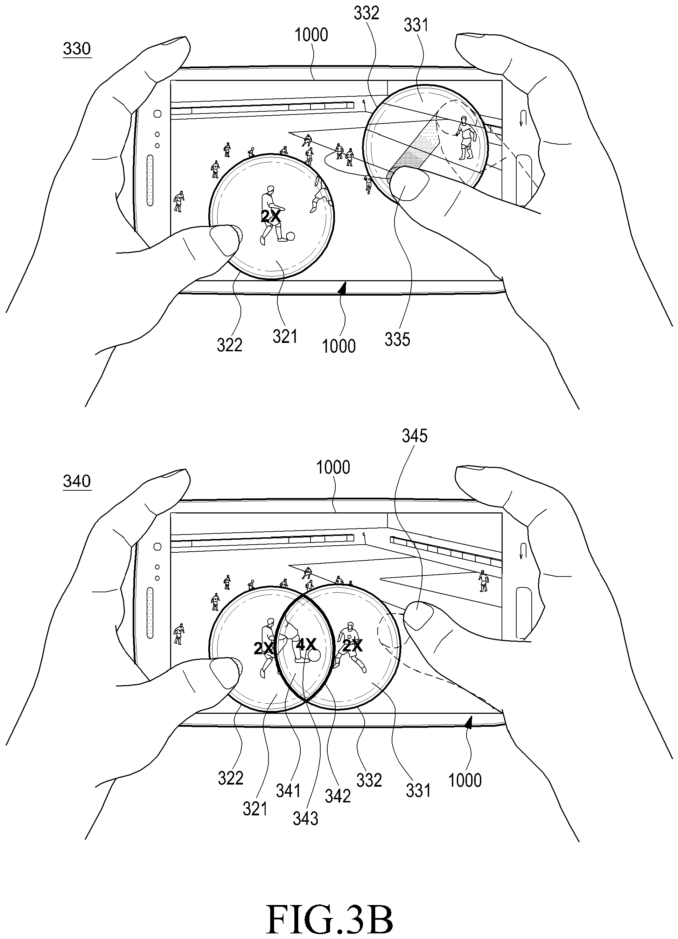

Referring to an image 330 of FIG. 3B, the controller 200 may display a second magnifying glass 332 on the touch screen 1000, in response to the input signal to enlarge another part of the contents. A part 331 of the contents which is enlarged by a second magnification ratio may be displayed within the second magnifying glass 332. The first magnification ratio and the second magnification ratio may be equal to or different from each other.

The controller 200 may receive an input signal to move the second magnifying glass 332 on the touch screen 1000. The input signal may correspond to, for example, a signal generated in the touch panel 147 in response to a user's touch drag gesture 335 on the second magnifying glass 332, by which the second magnifying glass 332 moves toward the first magnifying glass 322.

Referring to an image 340 of FIG. 3B, the controller 200 displays the moved second magnifying glass 332 on the touch screen in response to the input signal to move the second magnifying glass 332, and overlaps and displays a part of the first magnifying glass 322 and a part of the second magnifying glass 332. The contents 341 included in the overlapping area 342 may be enlarged and displayed by a third magnification ratio which is different from the first magnification ratio and the second magnification ratio. Herein, the third magnification ratio may be larger than the first magnification ratio or the second magnification ratio. For example, the third magnification ratio corresponds to a magnification ratio obtained by adding the first magnification ratio to the second magnification ratio or multiplying the first magnification ratio by the second magnification ratio. In detail, when the first magnification ratio is 2x and the second magnification ratio is 2x, the third magnification ratio may be 4x. Further, when the first magnification ratio is 3x and the second magnification ratio is 3x, the third magnification ratio may be 6x or 9x. Information 343 at the third magnification ratio is displayed on the overlapping area 342. The controller 200 considers locations on the touch screen 1000, of the first magnifying glass 322 and the second magnifying glass 332, in order to determine whether the first magnifying glass 322 and the second magnifying glass 332 overlap. For example, when the first magnifying glass 322 and the second magnifying glass 332 have shapes of circles having radii R1 and R2, respectively, in a case in which a straight length between a center of the first magnifying glass 322 and a center of the second magnifying glass 332 is smaller than a length obtained by adding the radius R1 to the radius R2, the controller 200 determines that the first magnifying glass 322 and the second magnifying glass 332 overlap each other, and enlarges and displays the contents included in the overlapping area 342 where the first magnifying glass 322 and the second magnifying glass 332 overlap each other, by the third magnification ratio.

In another exemplary aspect of the present invention, where a first magnifying glass and a second magnifying glass have shapes of rectangles having horizontal sides D1 and D2, respectively, and the first magnifying glass and the second magnifying glass are located on the same horizontal line, in a case where a straight length between a center of the first magnifying glass and a center of the second magnifying glass is smaller than a length obtained by adding a half of the horizontal side D1 to a half of the horizontal side D2, the controller 200 determines that the first magnifying glass and the second magnifying glass overlap each other and enlarges and displays the contents included in an overlapping area where the first magnifying glass and the second magnifying glass overlap each other, by the third magnification ratio.

In another exemplary aspect of the present invention, when a first magnifying glass and a second magnifying glass have shapes of regular triangles having sides S1 and S2, respectively, and the first magnifying glass and the second magnifying glass are located on the same horizontal line, in a case where a straight length between a center of the first magnifying glass and a center of the second magnifying glass is smaller than a length obtained by adding a half of the side S1 to a half of the side S2, the controller 200 determines that the first magnifying glass and the second magnifying glass overlap each other and enlarges and displays the contents included in an overlapping area where the first magnifying glass and the second magnifying glass overlap each other, by
the third magnification ratio.

As described above, according to the present invention, shapes of the first magnifying glass and the second magnifying glass are not limited to the circular shape, and may be implemented in a polygonal shape such as a quadrangle or a triangle or in a predetermined shape obtained by giving a shape to an outline of a specific object.

The controller 200 may receive an input signal to deselect the second magnifying glass 332 in a state in which a part of the first magnifying glass 322 and a part of the second magnifying glass 332 overlap each other on the touch screen 1000. The input signal may correspond to, for example, a signal generated in the touch panel 147 in response to a user's touch release gesture 345 on the second magnifying glass 332.

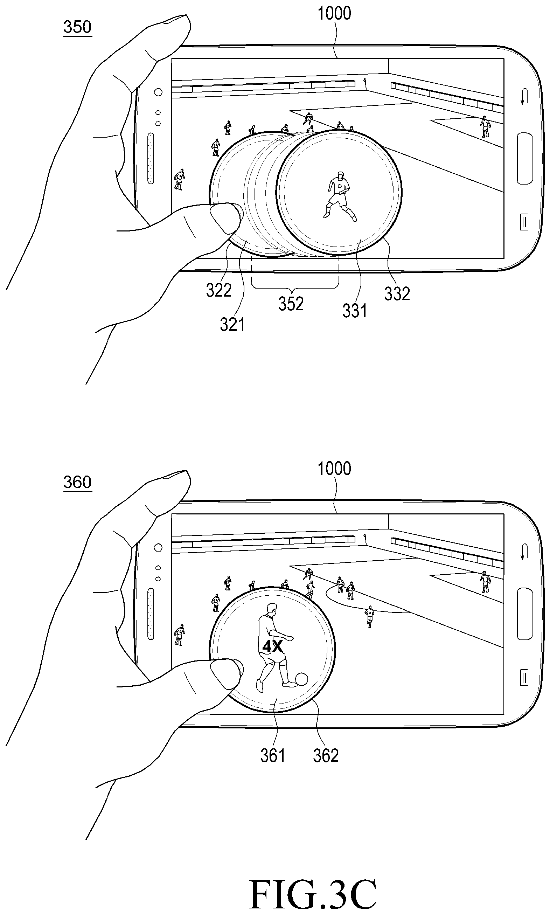

Referring to an image 350 of FIG. 3C, the controller 200 may provide an animation effect 352 in which the second magnifying glass 332 is merged to the first magnifying glass 322, in response to the input signal to deselect the second magnifying glass 332. The animation effect 352 may include, for example, a visual effect 352 in which the second magnifying glass 332 is sucked into the first magnifying glass 322, a sound effect, etc.

Referring to an image 360 of FIG. 3C, the controller 200 may display a third magnifying glass 362 as a result obtained by merging the first magnifying glass 322 and the second magnifying glass 332, that is, by overlapping the first magnifying glass 322 and the second magnifying glass 332. Herein, a size and a location of the third magnifying glass 362 is equal to the size and the location of the first magnifying glass 322, and only a magnification ratio of contents included in the third magnifying glass 362 may be different from that of the contents included in the first magnifying glass 322. The controller 200 enlarges and displays the contents 361 included in the third magnifying glass 362 by the third magnification ratio. The third magnification ratio may be, for example, a magnification ratio obtained by adding or multiplying the first magnification ratio of the first magnifying glass 322 to or by the second magnification ratio of the second magnifying glass 332.

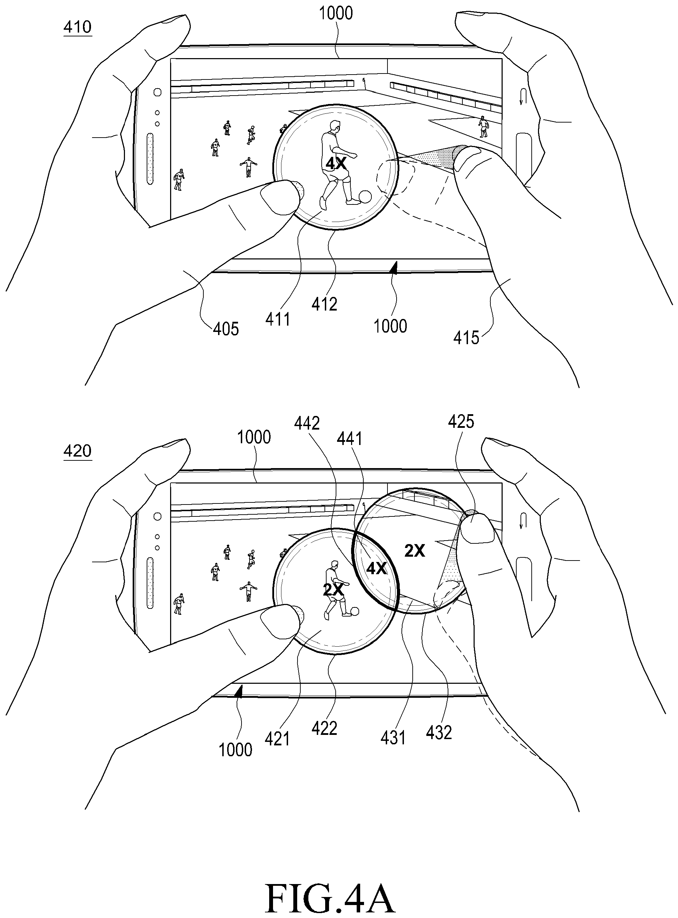

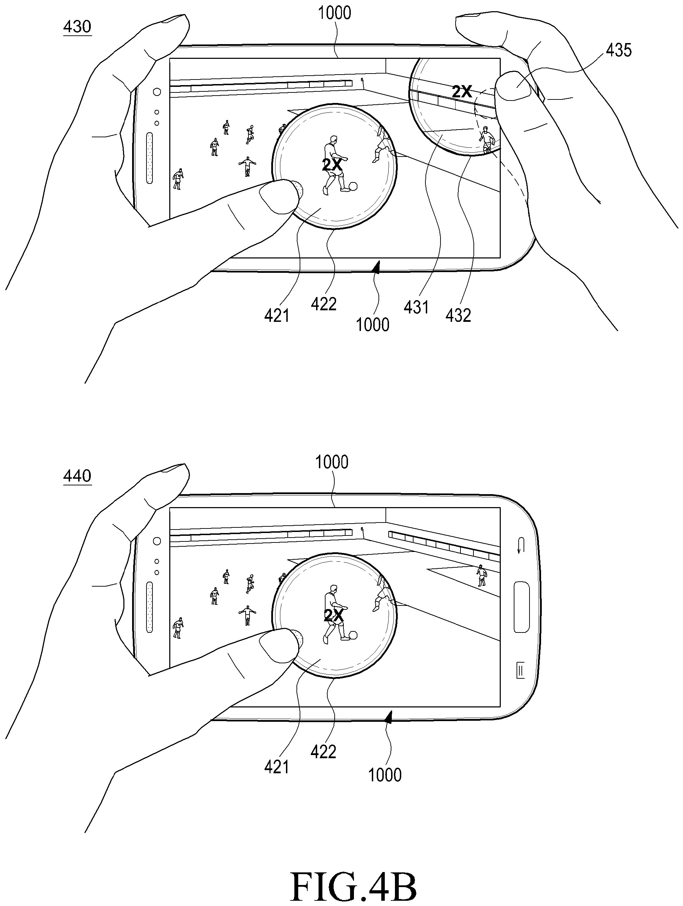

FIGs. 4A and 4B illustrate a process of reducing and displaying the enlarged contents according to an exemplary aspect of the present invention.

Referring to an image 410 of FIG. 4A, the controller 200 displays a third magnifying glass 412 on the touch screen 1000._A part 411 of the contents which is enlarged by the third magnification ratio is displayed within the third
magnifying glass 412. The third magnifying glass 412 may be, for example, a result obtained by merging a first magnifying glass and a second magnifying glass.

The controller 200 may receive an input signal to separate the third magnifying glass 412 on the touch screen 1000. The input signal may correspond to, for example, a signal generated in the touch panel 147, in response to a touch drag gesture 415 of a user on the third magnifying glass 412 using another finger, in a state in which a touch gesture 405 of the user is held on the third magnifying glass 412.

Referring to an image 420 of FIG. 4A, the controller 200 overlaps and displays a part of a first magnifying glass 422 and a part of a second magnifying glass 432 in response to the input signal to separate the third magnifying glass 412. The contents 421 included in the first magnifying glass 422 are enlarged and displayed by the first magnification ratio, contents 431 included in the second magnifying glass 432 are enlarged and displayed by the second magnification ratio, and contents 442 included in an area 442 where the first magnifying glass 422 and the second magnifying glass 432 overlap each other are enlarged and displayed by the third magnification ratio.

The controller 200 may receive an input signal to move the second magnifying glass 432 on the touch screen 1000. The input signal may correspond to, for example, a signal generated in the touch panel 147, in response to a user's touch drag gesture 425 on the second magnifying glass 432 using another finger, in a state in which a touch is continuously held on the first magnifying glass 422.

Referring to an image 430 of FIG. 4B, the controller 200 may display the first magnifying glass 422 and the second magnifying glass 432 such that a part of the first magnifying glass 422 and a part of the second magnifying glass 432 do not overlap each other, in response to the input signal to move the second magnifying glass 432.

The controller 200 may receive an input signal to deselect the second magnifying glass 432 on the touch screen 1000. The input signal may correspond to, for example, a signal generated in the touch panel 147 in response to a user's touch release gesture 435 on the second magnifying glass 432.

Referring to an image 440 of FIG. 4B, the controller 200 may eliminate the second magnifying glass 432 from the touch screen 1000, in response to the input signal to deselect the second magnifying glass 432. Only the first magnifying glass 422 may be displayed on the touch screen 1000. When the controller 200 receives an input signal to deselect the first magnifying glass 422, the first magnifying glass 422 may also be eliminated from the touch screen 1000.

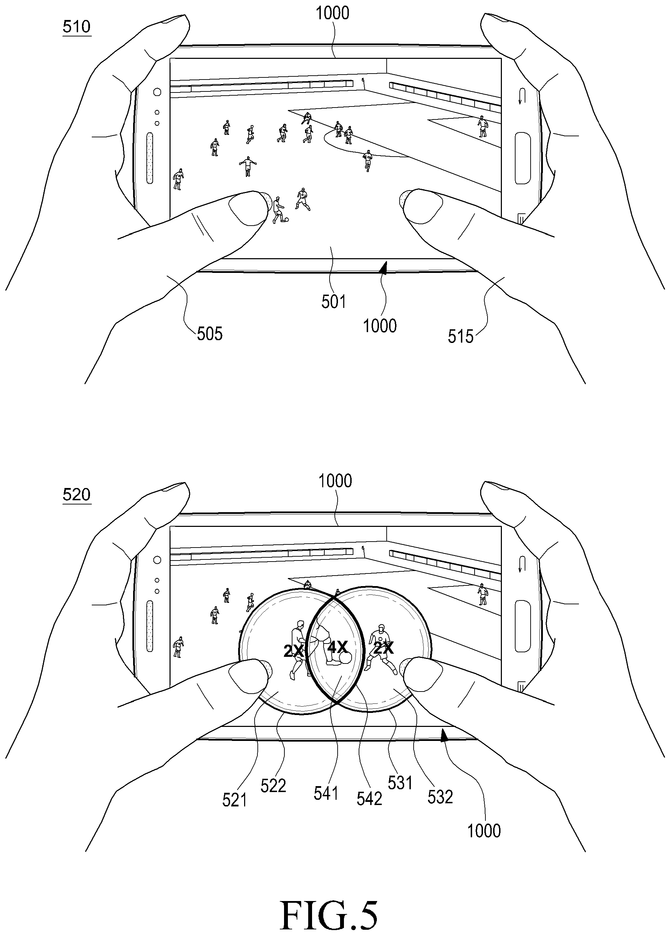

FIG. 5 illustrates a process of simultaneously enlarging and displaying a plurality of areas of the contents according to an exemplary aspect of the present invention.

Referring to an image 510 of FIG. 5A, the controller 200 displays contents 501 on the touch screen 1000. The controller 200 may receive an input signal to enlarge a plurality of areas of the contents. The input signal may correspond to, for example, a signal generated in the touch panel 147 in response to a user's first touch gesture 505 and a user's second touch gesture 515 on the contents. The first touch gesture 505 and the second touch gesture 515 may be performed simultaneously or almost simultaneously. Herein, the term "almost simultaneously" implies that the first touch gesture 505 and the second touch gesture 515 are performed within about 0.5 of each other.

Referring to an image 520 of FIG. 5A, the controller displays a first magnifying glass 522 and a second magnifying glass 532 simultaneously or almost simultaneously, in response to the input signal to enlarge the plurality of areas of the contents. The contents 521 included in the first magnifying glass 522 are enlarged and displayed by the first magnification ratio, contents 531 included in the second magnifying glass 532 are enlarged and displayed by the second magnification ratio, and contents 541 included in an area 542 where the first magnifying glass 522 and the second magnifying glass 532 overlap each other are enlarged and displayed by the third magnification ratio. The third magnification ratio may be a magnification ratio obtained by adding or multiplying the first magnification ratio of the first magnifying glass 522 to or by the second magnification ratio of the second magnifying glass 532.

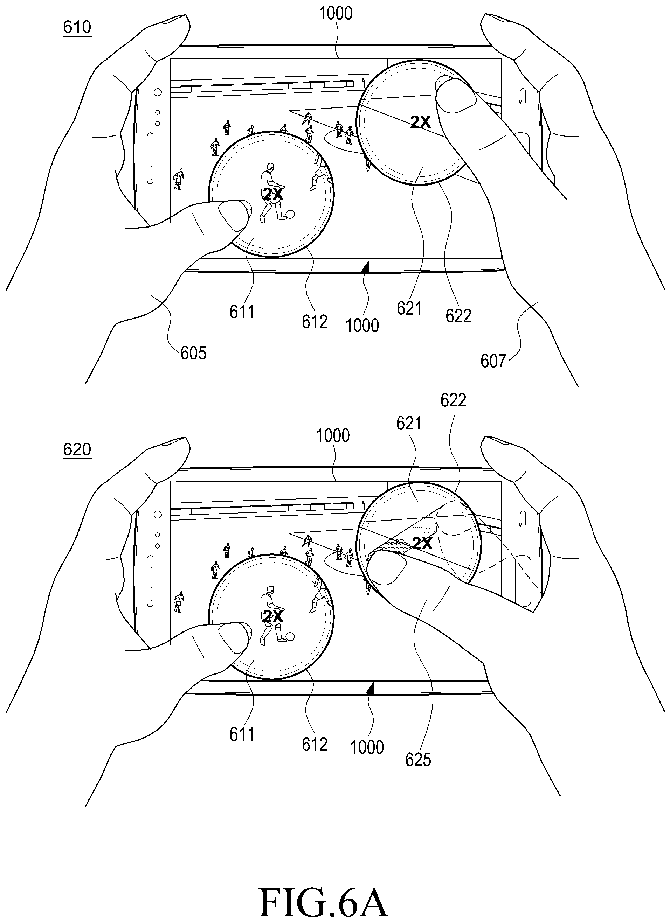

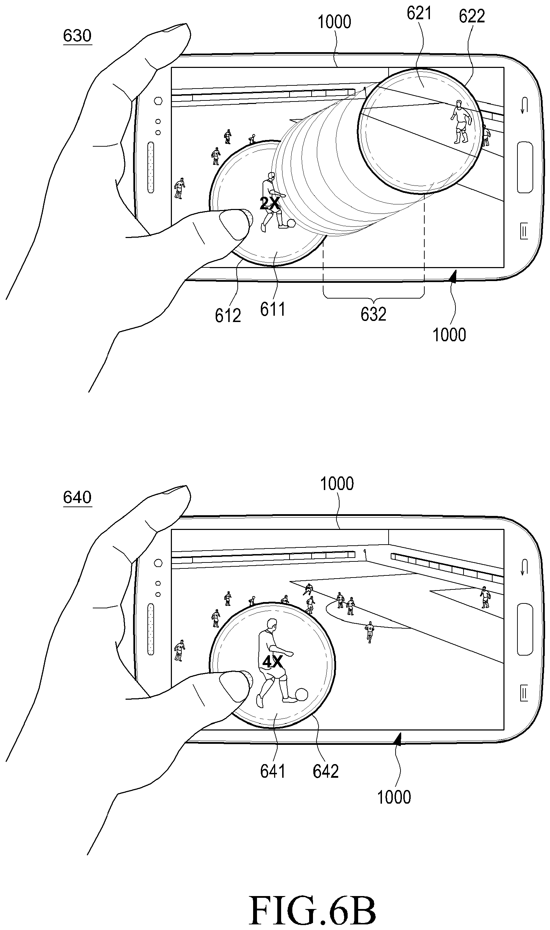

FIGs. 6A and 6B illustrate a process of increasing an enlargement magnification ratio of the contents according to an exemplary aspect of the present invention.

Referring to an image 610 of FIG. 6A, the controller 200 enlarges contents 611 included in a first magnifying glass 612 by the first magnification ratio, displays the enlarged contents 611, enlarges contents 621 included in a second magnifying glass 622 by the second magnification ratio, and displays the enlarged contents 621, in response to the input signal to enlarge a plurality of areas of contents.

Referring to an image 620 of FIG. 6A, the controller 200 receives an input signal to merge the first magnifying glass 612 and the second magnifying glass 622, in a state in which the first magnifying glass 612 and the second magnifying glass 622 are displayed on the touch screen 1000. The input signal may correspond to, for example, a signal generated in the touch panel 147 in response to a user's flick gesture 625 progressing from the second magnifying glass 622 toward the first magnifying glass 612.

Referring to an image 630 of FIG. 6B, the controller 200 provides an animation effect 632 in which the second magnifying glass 622 is merged to the first magnifying glass 612, in response to an input signal to merge the first magnifying glass 612 and the second magnifying glass 622. The animation effect 632 may include, for example, a visual effect 632 in which the second magnifying glass 622 is sucked into the first magnifying glass 611, etc.

Referring to an image 640 of FIG.6B, the controller 200 displays a third magnifying glass 642 as a result obtained by merging the first magnifying glass 612 and the second magnifying glass 622. The controller 200 enlarges and displays the contents 641 included in the third magnifying glass 642 by the third magnification ratio. The third magnification ratio may be a magnification ratio obtained by adding or multiplying the first magnification ratio of the first magnifying glass 612 to or by the second magnification ratio of the second magnifying glass 622.

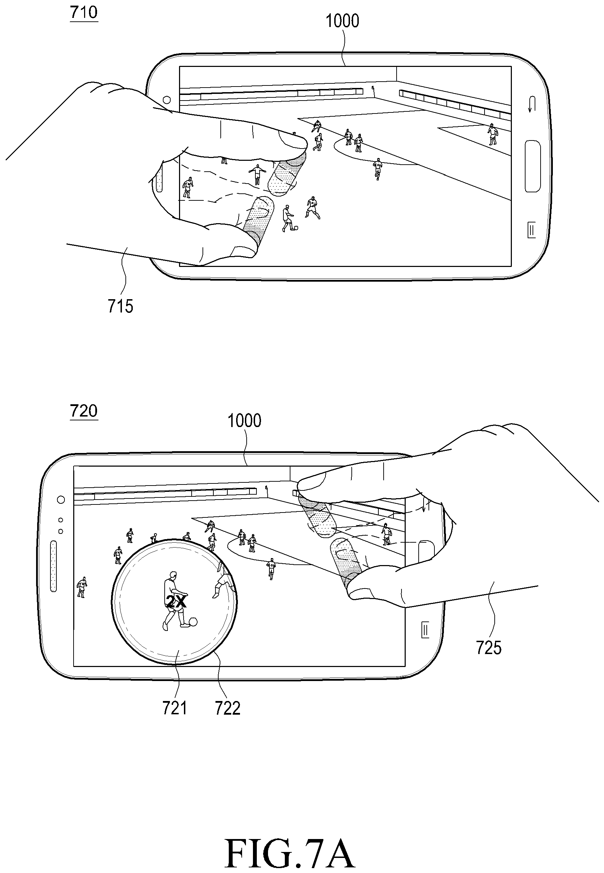

FIGs. 7A to 7B illustrate a process of enlarging contents according to another exemplary aspect of the present invention.

Referring to an image 710 of FIG. 7A, the controller 200 receives an input signal to enlarge a part of the contents, in a state in which the contents are displayed on the touch screen 1000. The input signal may correspond to, for example, a signal generated in the touch panel 147 in response to a user's pinch-open gesture 715 on the contents. The pinch-open gesture 715 may correspond to a gesture of touching two points on the touch screen 1000 by using two fingers and increasing a length between the two fingers in a state in which the touch is held.

Referring to an image 720 of FIG. 7A, the controller 200 may display a first magnifying glass 722 on the touch screen 1000, in response to the input signal to enlarge a part of the contents.

In an exemplary aspect of the present invention, a size and a location of the
first magnifying glass 722 displayed on the touch screen 1000 may be determined in consideration of points where the user's pinch-open gesture 715 is touched and released on the touch screen 1000. For example, the controller 200 may determine a center point between two points where the two fingers are touched on the touch screen 1000, as a center of the first magnifying glass 722, and may determine a straight length between two points where touches of the two fingers are released after increasing a length between the two fingers, as a diameter of the first magnifying glass 722.

In another exemplary aspect of the present invention, the controller 200 may set a magnification ratio by reflecting the straight length between the two points where the touches of the two fingers are released. For example, the controller 200 may set a magnification ratio to enlarge a part of the contents through the first magnifying glass 722 as a first magnification ratio (e.g. 2x) when the straight length between the two points where the touches of the fingers are released exceeds a first length, may set the magnification ratio to enlarge a part of the contents through the first magnifying glass 722 as a second magnification ratio (e.g. 3x) when the straight length between the two points where the touches of the fingers are released exceeds a second length, and may set the magnification ratio to enlarge a part of the contents through the first magnifying glass 722 as a third magnification ratio (e.g. 4x) when the straight length between the two points where the touches of the fingers are released exceeds a third length.

When a user releases a touch on the first magnifying glass 722, the first magnifying glass 722 may be continuously displayed on the touch screen 1000.

The controller 200 may receive an input signal to enlarge a part of the contents. The input signal may correspond to, for example, a signal generated in the touch panel 147 in response to a user's pinch-open gesture 725 on another part of the contents.

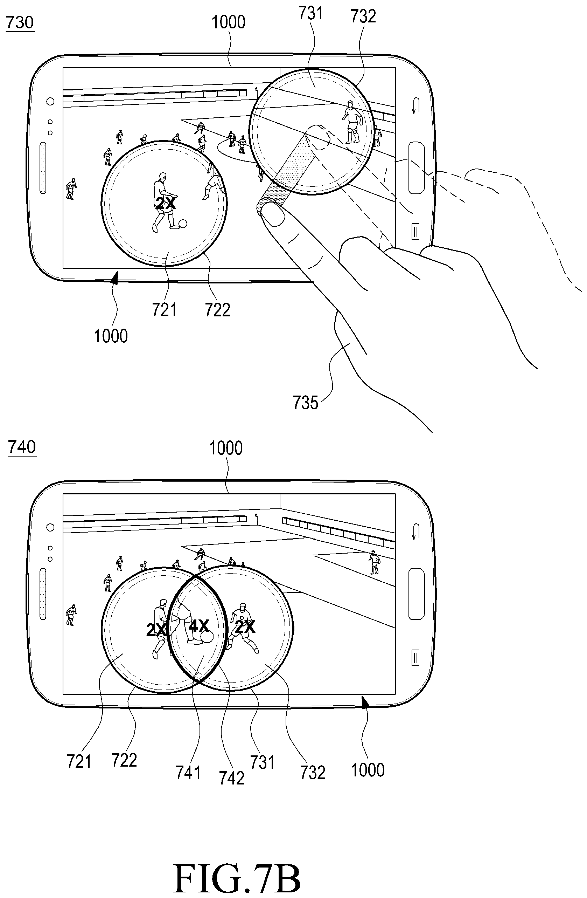

Referring to an image 730 of FIG. 7B, the controller 200 displays a second magnifying glass 732 on the touch screen 1000, in response to the input signal to enlarge another part of the contents.

The controller 200 may receive an input signal to move the second magnifying glass 732. The input signal may correspond to, for example, a signal generated in the touch panel 147 in response to a user's touch drag gesture 735 moving from the second magnifying glass 735 toward the first magnifying glass 722.

Referring to an image 740 of FIG. 7B, the controller 200 displays the first magnifying glass 722 and the moved second magnifying glass 732 such that a part of the first magnifying glass 722 and a part of the second magnifying glass 732 overlap each other, in response to the input signal to move the second magnifying glass 732. A part 721 of contents included in the first magnifying glass 722 are enlarged and displayed by the first magnification ratio, a part 731 of contents included in the second magnifying glass 732 are enlarged and displayed by the second magnification ratio, and a part 741 of contents included in an area where the first magnifying glass 722 and the second magnifying glass 732 overlap each other are enlarged and displayed by the third magnification ratio. Herein, the third magnification ratio may be larger than the first magnification ratio or the second magnification ratio.

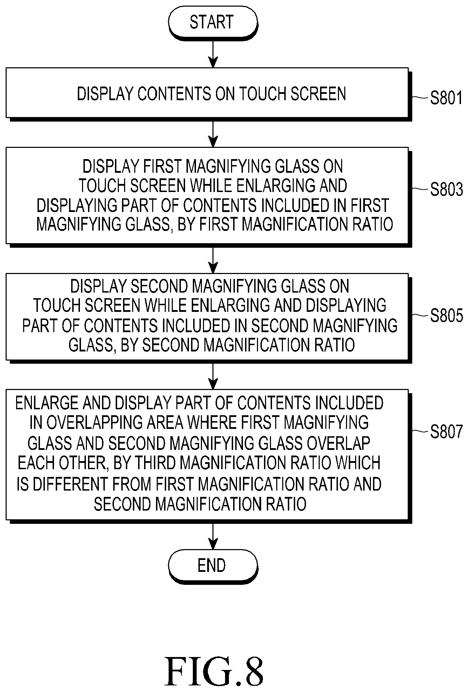

FIG. 8 is a flowchart illustrating a process of enlarging and displaying contents according to an exemplary aspect of the present invention.

The portable terminal displays contents on the touch screen 1000. The contents may include, for example, an image, a video, a broadcasting image, etc. at step S801.

The portable terminal 100 displays a first magnifying glass on the touch screen 1000, and enlarges and displays a part of contents included in the first magnifying glass by a first magnification ratio at step S803. For example, the portable terminal 100 may enlarge and display the part of the contents included in the first magnifying glass, by the first magnification ratio, in response to a user's touch gesture or a user's pinch open gesture on the touch screen 1000.

The portable terminal 100 displays a second magnifying glass on the touch screen 1000, and enlarges and displays a part of contents included in the second magnifying glass by a second magnification ratio at step S805. For example, the portable terminal 100 may enlarge and display the part of the contents included in the second magnifying glass by the second magnification ratio, in response to a touch gesture or a pinch-open gesture of a user on the touch screen 1000. Step S803 and step S805 may be performed simultaneously or sequentially.

The portable terminal 100 enlarges and displays a part of contents included in an area where the first magnifying glass and the second magnifying glass overlap each other, by a third magnification ratio which is different from the first magnification ratio and the second magnification ratio at step S807. Step S805 and step S807 may be performed simultaneously or sequentially.

Otherwise, step S807 is performed, and step S805 is then performed.

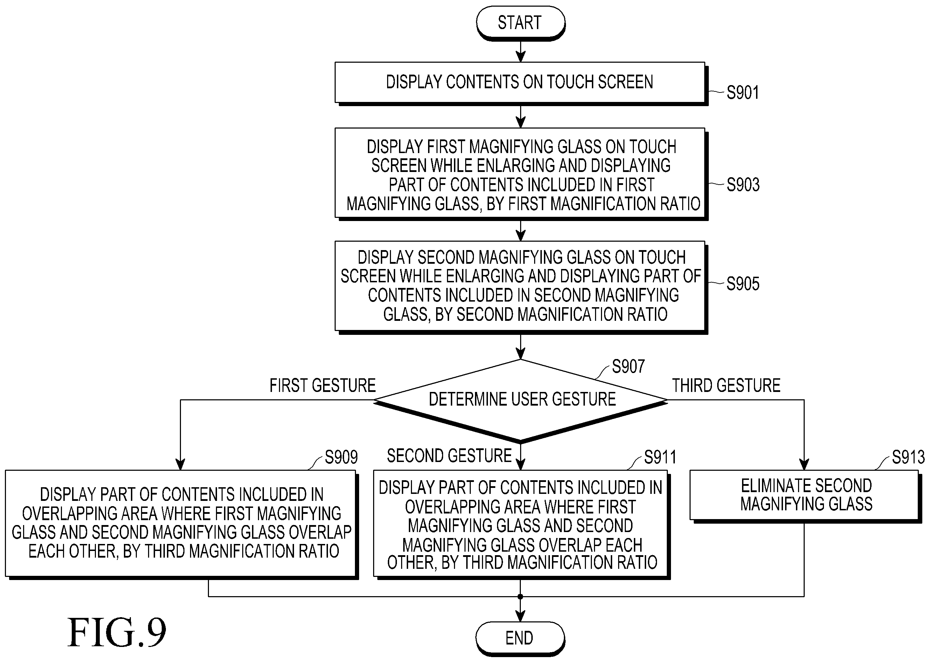

FIG. 9 is a flowchart illustrating a process of enlarging and displaying contents according to another exemplary aspect of the present invention.

The portable terminal displays contents on the touch screen 1000 at step S901.

The portable terminal 100 displays a first magnifying glass on the touch screen 1000, and enlarges and displays a part of contents included in the first magnifying glass by a first magnification ratio at step S903.

The portable terminal 100 displays a second magnifying glass on the touch screen 1000, and enlarges and displays a part of contents included in the second magnifying glass by a second magnification ratio at step S905. There may be no area where the first magnifying glass and the second magnifying glass overlap each other.

The portable terminal 100 determines a user's gesture on the touch screen 1000 at step S907.

When it is determined that the gesture of the user is a first gesture (e.g. a touch drag gesture) on the second magnifying glass, the portable terminal 100 enlarges a part of contents included in an area where the first magnifying glass and the second magnifying glass overlap each other, by a third magnification ratio which is different from the first magnification ratio and the second magnification ratio, and displays the enlarged contents at step S909.

When it is determined that the gesture of the user is a second gesture (e.g. a flick gesture) on the second magnifying glass, the portable terminal 100 displays a third magnifying glass as a result that the entirety of the first magnifying glass and the entirety of the second magnifying glass overlap each other, and enlarges a part of contents included in the third magnifying glass by a third magnification ratio which is different from the first magnification ratio and the second magnification ratio, and displays the enlarged contents at step S911.

When it is determined that the gesture of the user is a third gesture (e.g. a touch release gesture) on the second magnifying glass, the portable terminal 100 eliminates the second magnifying glass displayed on the touch screen 1000 at step S913.

FIG. 10 is a block diagram illustrating a configuration of a portable terminal according to another exemplary aspect of the present invention.

Referring to FIG. 10, the portable terminal 100 includes a touch screen 1000 and a controller 200. A hardware configuration of the touch screen 1000 and the controller 200 is described above.

The touch screen 1000 displays contents. The controller 200 is configured to cause the touch screen 1000 to display a first magnifying glass and a second magnifying glass on the touch screen 1000, where a part of contents included in the first magnifying glass are enlarged and displayed by a first magnification ratio, and a part of contents included in the second magnifying glass are enlarged and displayed by a second magnification ratio. The controller can cause the enlargement and display of a part of contents included in an area where the first magnifying glass and the second magnifying glass overlap each other, by a third magnification ratio which is different from the first magnification ratio and the second magnification ratio.

It may be understood that exemplary aspects of the present invention can be implemented in software, hardware, or a combination thereof. Such software may be stored, for example, in a volatile or non-volatile storage device such as a ROM, etc., a memory such as a RAM, a memory chip, a memory device, or a memory integrated circuit (IC), or an optical or magnetic recordable and a machine-readable (e.g. a computer-readable) medium such as a compact disc (CD), a digital video disc (DVD), a magnetic disk, or a magnetic tape, regardless of its ability to be erased or its ability to be re-recorded.

The method of enlarging and displaying contents of a portable terminal according to the present invention can be implemented by a computer or a portable terminal including a controller and a memory, and the memory may correspond to an example of a machine-readable storage medium suitable for storing a program and programs including instructions for implementing exemplary aspects of the present invention. The present invention includes a program including code for implementing the apparatus or the method defined in the appended claims of the present invention and a machine-readable (computer-readable, etc recording medium for storing the program. Further, the program may be electronically transferred by a medium such as a communication signal transferred through a wired or wireless connection, and the present invention appropriately includes equivalents of the program. Further, the portable terminal according to the present invention can receive the program from a program providing apparatus wiredly or wirelessly connected to the device, and store the received program. Furthermore, a user may
selectively limit an operation according to an exemplary aspect of the present invention or expand the operation according to an exemplary aspect of the present invention in conjunction with a server through a network, by adjusting a setting of the portable terminal.

While the invention has been shown and described with reference to certain exemplary aspects thereof, it will be understood by those skilled in the art that various changes in form and detail may be made therein without departing from the scope of the invention as defined by the appended claims and their equivalents.

## Claims

1. A method of enlarging and displaying contents of a portable terminal, the method comprising:
displaying (S801) the contents on a touch screen;
displaying (S803) a first magnifying glass on the touch screen while enlarging and displaying a part of the contents included in the first magnifying glass by a first magnification ratio; and
displaying (S805) a second magnifying glass on the touch screen while enlarging and displaying a part of the contents included in the second magnifying glass by a second magnification ratio,
wherein a part of the contents included in an overlapping area where the first magnifying glass and the second magnifying glass overlap each other is enlarged and displayed by a third magnification ratio which is different from the first magnification ratio and the
second magnification ratio(S807), **characterized in that**:
when the contents correspond to a moving image being reproduced by a first speed, displaying the first magnifying glass on the touch screen while enlarging and displaying the part of the contents included in the first magnifying glass by a first magnification ratio comprises enlarging and displaying a part of the moving image included in the first magnifying glass by the first magnification ratio while reproducing the part of the moving image by a second speed which is different from the first speed.

2. The method of claim 1 comprising:
moving the second magnifying glass in response to a user's gesture on the second magnifying glass so that the second magnifying glass overlaps the first magnifying glass.

3. The method of claim 1, wherein when enlarging and displaying the part of the contents by the third magnification ratio, and
when an entirety of the first magnifying glass and an entirety of the second magnifying glass overlap each other, a third magnifying glass is displayed on the touch screen, and a part of the contents included in the third magnifying glass is enlarged and displayed by the third magnification ratio.

4. The method of claim 1, further comprising eliminating (S913) the second magnifying glass and the overlapping area from the touch screen in response to a user's gesture on the second magnifying glass.

5. The method of claim 1, wherein when enlarging and displaying the part of the contents by the third magnification ratio,
when the first magnification ratio and the second magnification ratio have shapes of circles with radii having lengths of R1 and R2, respectively, and
when a straight length between a center of the first magnifying glass and a center of the second magnifying glass is smaller than a length obtained by adding the length of R to the length of R2, a part of the contents included in the overlapping area where the first magnifying glass and the second magnifying glass overlap each other is enlarged and displayed by the third magnification ratio.

6. The method of claim 1 comprising:
displaying a third magnifying glass on the touch screen while enlarging and displaying a part of the contents included in the third magnifying glass by the third magnification ratio; and
forming the third magnifying glass by completely overlapping the first magnifying glass and the second magnifying glass with each other.

7. A portable terminal for enlarging and displaying contents, the portable terminal comprising:
a touch screen (1000) configured to display the contents;
a controller (200) configured to cause the touch screen to display a first magnifying glass (322) and a second magnifying glass (332) wherein a part (321) of the contents included in the first magnifying glass are enlarged and displayed by a first magnification ratio, a part (331) of the contents included in the second magnifying glass are enlarged and displayed by a second magnification ratio, and a part of the contents included in an overlapping area (342) where the first magnifying glass and the second magnifying glass overlap each other are enlarged and displayed by a third magnification ratio which is
different from the first magnification ratio and the second magnification ratio,
**characterized in that**:
when the contents corresponds to a moving image being reproduced by a first speed,
the controller is configured to cause the enlargement and display of the part of the contents included in the first magnifying glass by the first magnification ratio while reproducing the part of the contents included in the first magnifying glass by a second speed which is different from the first speed.

8. The portable terminal of claim 7, wherein the touch screen receives an input of a user's gesture on the second magnifying glass, and
the controller is configured to cause the second magnifying glass to overlap the first magnifying glass by moving the second magnifying glass in response to a user's gesture on the second magnifying glass, and cause an enlargement and display of a part of the contents included in the overlapping area where the first magnifying glass and the second magnifying glass overlap each other by the third magnification ratio.

9. The portable terminal of claim 7, wherein when an entirety of the first magnifying glass and an entirety of the second magnifying glass overlap each other, the controller is configured to cause the touch screen to display a third magnifying glass while enlarging and displaying a part of the contents included in the third magnifying glass by the third magnification ratio.

10. The portable terminal of claim 7, wherein the touch screen is configured to receive an input of a user's gesture on the second magnifying glass, and wherein the controller is configured to cause the elimination of the second magnifying glass and the overlapping area from the touch screen in response to the user's gesture on the second magnifying glass.

11. The portable terminal of claim 7, wherein when the first magnifying glass and the second magnifying glass have shapes of circles with radii of R1 and R2, respectively, and when a straight length between a center of the first magnifying glass and a center of the second magnifying glass is smaller than a length obtained by adding the radius of R1 to the radius of R2, the controller is configured to cause an enlargement and display of a part of the contents included in the overlapping area where the first magnifying glass and the second magnifying glass overlap each other, by the third magnification ratio.

12. The portable terminal of claim 7, comprising
a third magnifying glass while enlarging and displaying a part of the contents included in the third magnifying glass, by the third magnification ratio; and
a controller configured to cause the enlargement and the display of the part of the contents included in the overlapping area where the first magnifying glass and the second magnifying glass overlap each other by the third magnification ratio, in response of a user's gesture on the third magnifying glass, wherein the third magnifying glass is formed by the first and second magnifying glasses completely overlapping with each other.

13. The portable terminal of claim 12, wherein the first magnification ratio or the second magnification ratio is smaller than the third magnification ratio.

## Patentansprüche

1. Verfahren des Vergrößerns und Anzeigens von Inhalten eines tragbaren Endgerätes, wobei das Verfahren Folgendes umfasst:
Anzeigen (S801) der Inhalte auf einem Berührbildschirm;
Anzeigen (S803) einer ersten Lupe auf dem Berührbildschirm, während ein Teil der Inhalte, die in der ersten Lupe beinhaltet sind, um ein erstes Vergrößerungsverhältnis vergrößert und angezeigt wird; und
Anzeigen (S805) einer zweiten Lupe auf dem Berührbildschirm, während ein Teil der Inhalte, die in der zweiten Lupe beinhaltet sind, um ein zweites Vergrößerungsverhältnis vergrößert und angezeigt wird,
wobei ein Teil der Inhalte, der in einem Überlappungsgebiet, wo die erste Lupe und die zweite Lupe sich einander überlappen, um ein drittes Vergrößerungsverhältnis vergrößert und angezeigt wird, das vom ersten Vergrößerungsverhältnis und zweiten Vergrößerungsverhältnis verschieden ist (S807), **dadurch gekennzeichnet, dass**,
wenn die Inhalte einem Bewegtbild entsprechen, das in einer ersten Geschwindigkeit wiedergegeben wird,
Anzeigen der ersten Lupe auf dem Berührbildschirm, während der Teil der Inhalte, die in der ersten Lupe beinhaltet sind, um ein erstes Vergrößerungsverhältnis vergrößert und angezeigt werden, Vergrößern und Anzeigen eines Teiles des Bewegtbildes um das erste Vergrößerungsverhältnis umfasst, das in der ersten Lupe beinhaltet ist, während der Teil des Bewegtbildes in einer zweiten Geschwindigkeit wiedergegeben wird, die von der ersten Geschwindigkeit verschieden ist.

2. Verfahren nach Anspruch 1, das Folgendes umfasst:
Bewegen der zweiten Lupe in Reaktion auf eine Benutzergeste auf der zweiten Lupe derart, dass die zweite Lupe die erste Lupe überlappt.

3. Verfahren nach Anspruch 1, wobei beim Vergrößern und Anzeigen des Teiles der Inhalte um das dritte Vergrößerungsverhältnis, und
wenn eine Gesamtheit der ersten Lupe und eine Gesamtheit der zweiten Lupe sich einander überlappen, eine dritte Lupe auf dem Berührbildschirm angezeigt wird und ein Teil der Inhalte, die in der dritten Lupe beinhaltet sind, um das dritte Vergrößerungsverhältnis vergrößert und angezeigt wird.

4. Verfahren nach Anspruch 1, das ferner Entfernen (S913) der zweiten Lupe und des Überlappungsgebietes aus dem Berührbildschirm in Reaktion auf eine Benutzergeste auf der zweiten Lupe umfasst.

5. Verfahren nach Anspruch 1, wobei beim Vergrößern und Anzeigen des Teiles der Inhalte um das dritte Vergrößerungsverhältnis,
wenn das erste Vergrößerungsverhältnis und das zweite Vergrößerungsverhältnis Konturen von Kreisen mit Radien aufweisen, die Längen von R1 bzw. R2 aufweisen, und
wenn eine gerade Länge zwischen einem Mittelpunkt der ersten Lupe und einem Mittelpunkt der zweiten Lupe kleiner als eine Länge ist, die durch Addieren der Länge von R1 zur Länge von R2 erlangt wird, ein Teil der Inhalte, die im Überlappungsgebiet beinhaltet sind, wo sich die erste Lupe und die zweite Lupe einander überlappen, um das dritte Vergrößerungsverhältnis vergrößert und angezeigt wird.

6. Verfahren nach Anspruch 1, das Folgendes umfasst:
Anzeigen einer dritten Lupe auf dem Berührbildschirm, während ein Teil der Inhalte, die in der dritten Lupe beinhaltet sind, um das dritte Vergrößerungsverhältnis vergrößert und angezeigt wird; und
Bilden der dritten Lupe durch vollständiges Überlappen der ersten Lupe und der zweiten Lupe miteinander.

7. Tragbares Endgerät zum Vergrößern und Anzeigen von Inhalten, wobei das tragbare Endgerät Folgendes umfasst:
einen Berührbildschirm (1000), der konfiguriert ist, die Inhalte anzuzeigen;
eine Steuerung (200), die konfiguriert ist, zu veranlassen, dass der Berührbildschirm eine erste Lupe (322) und eine zweite Lupe (332) anzeigt, wobei ein Teil (321) der Inhalte, die in der ersten Lupe beinhaltet sind, um ein erstes Vergrößerungsverhältnis vergrößert und angezeigt wird, ein Teil (331) der Inhalte, die in der zweiten Lupe beinhaltet sind, um ein zweites Vergrößerungsverhältnis vergrößert und angezeigt wird und ein Teil der Inhalte, der in einem Überlappungsgebiet (342), wo die erste Lupe und die zweite Lupe sich einander überlappen, um ein drittes Vergrößerungsverhältnis vergrößert und angezeigt wird, das vom ersten Vergrößerungsverhältnis und zweiten Vergrößerungsverhältnis verschieden ist, **dadurch gekennzeichnet, dass**
wenn die Inhalte einem Bewegtbild entsprechen, das in einer ersten Geschwindigkeit wiedergegeben wird,
die Steuerung konfiguriert ist, die Vergrößerung und Anzeige des Teiles der Inhalte, die in der ersten Lupe beinhaltet sind, um das erste Vergrößerungsverhältnis zu veranlassen, während der Teil der Inhalte, die in der ersten Lupe beinhaltet sind, in einer zweiten Geschwindigkeit wiedergegeben wird, die von der ersten Geschwindigkeit verschieden ist.

8. Tragbares Endgerät nach Anspruch 7, wobei der Berührbildschirm eine Eingabe einer Benutzergeste auf der zweiten Lupe empfängt und
die Steuerung konfiguriert ist, zu veranlassen, dass durch Bewegen der zweiten Lupe in Reaktion auf eine Benutzergeste auf der zweiten Lupe die zweite Lupe die erste Lupe überlappt, und eine Vergrößerung und Anzeige eines Teiles der Inhalte, die im Überlappungsgebiet beinhaltet sind, wo sich die erste Lupe und die zweite Lupe einander überlappen, um das dritte Vergrößerungsverhältnis zu veranlassen.

9. Tragbares Endgerät nach Anspruch 7, wobei, wenn eine Gesamtheit der ersten Lupe und eine Gesamtheit der zweiten Lupe sich einander überlappen, die Steuerung konfiguriert ist, zu veranlassen, dass der Berührbildschirm eine dritte Lupe anzeigt, während ein Teil der Inhalte, die in der dritten Lupe beinhaltet sind, um das dritte Vergrößerungsverhältnis vergrößert und angezeigt wird.

10. Tragbares Endgerät nach Anspruch 7, wobei der Berührbildschirm konfiguriert ist, eine Eingabe einer Benutzergeste auf der zweiten Lupe zu empfangen, und wobei die Steuerung konfiguriert ist, die Entfernung der zweiten Lupe und des Überlappungsgebietes vom Berührbildschirm in Reaktion auf die Benutzergeste auf der zweiten Lupe zu veranlassen.

11. Tragbares Endgerät nach Anspruch 7, wobei, wenn die erste Lupe und die zweite Lupe Konturen von Kreisen mit Radien R1 bzw. R2 aufweisen und wenn eine gerade Länge zwischen einem Mittelpunkt der ersten Lupe und einem Mittelpunkt der zweiten Lupe kleiner als eine Länge ist, die durch Addieren des Radius R1 zum Radius R2 erlangt wird, die Steuerung konfiguriert ist, eine Vergrößerung und Anzeige eines Teiles der Inhalte, die im Überlappungsgebiet beinhaltet sind, wo sich die erste Lupe und die zweite Lupe einander überlappen, um das dritte Vergrößerungsverhältnis zu veranlassen.

12. Tragbares Endgerät nach Anspruch 7, das Folgendes umfasst:
eine dritte Lupe, während ein Teil der Inhalte, die in der dritten Lupe beinhaltet sind, um das dritte Vergrößerungsverhältnis vergrößert und angezeigt wird; und
eine Steuerung, die konfiguriert ist, die Vergrößerung und die Anzeige des Teiles der Inhalte, die im Überlappungsgebiet beinhaltet sind, wo sich die erste Lupe und die zweite Lupe einander überlappen, um das dritte Vergrößerungsverhältnis in Reaktion eine Benutzergeste auf die dritte Lupe zu veranlassen, wobei die dritte Lupe durch die ersten und zweiten Lupen gebildet ist, die sich vollständig miteinander überlappen.

13. Tragbares Endgerät nach Anspruch 12, wobei das erste Vergrößerungsverhältnis oder das zweite Vergrößerungsverhältnis kleiner als das dritte Vergrößerungsverhältnis ist.

## Revendications

1. Procédé d'agrandissement et d'affichage d'un contenu d'un terminal portable, le procédé comprenant :
l'affichage (S801) du contenu sur un écran tactile ;
l'affichage (S803) d'une première loupe sur l'écran tactile tout en agrandissant et en affichant une partie du contenu incluse dans la première loupe à un premier taux de grossissement ; et
l'affichage (S805) d'une deuxième loupe sur l'écran tactile tout en agrandissant et en affichant une partie du contenu incluse dans la deuxième loupe à un deuxième taux de grossissement,
dans lequel une partie du contenu incluse dans une zone de chevauchement dans laquelle la première loupe et la deuxième loupe se chevauchent est agrandie et affichée à un troisième taux de grossissement qui est différent du premier taux de grossissement et du deuxième taux de grossissement (S807), **caractérisé en ce que** :
lorsque le contenu correspond à une image animée en cours de reproduction à une première vitesse, l'affichage de la première loupe sur l'écran tactile tout en agrandissant et en affichant la partie du contenu incluse dans la première loupe à un premier taux de grossissement comprend l'agrandissement et l'affichage d'une partie de l'image animée incluse dans la première loupe au premier taux de grossissement tout en reproduisant la partie de l'image animée à une deuxième vitesse différente de la première vitesse.

2. Procédé selon la revendication 1, comprenant :
le déplacement de la deuxième loupe en réponse à un geste d'un utilisateur sur la deuxième loupe de sorte que la deuxième loupe chevauche la première loupe.

3. Procédé selon la revendication 1, dans lequel, lors de l'agrandissement et de l'affichage de la partie du contenu au troisième taux de grossissement, et lorsque l'intégralité de la première loupe et l'intégralité de la deuxième loupe se chevauchent, une troisième loupe est affichée sur l'écran tactile, et une partie du contenu incluse dans la troisième loupe est agrandie et affichée au troisième taux de grossissement.

4. Procédé selon la revendication 1, comprenant en outre l'élimination (S913) de la deuxième loupe et de la zone de chevauchement de l'écran tactile en réponse à un geste de l'utilisateur sur la deuxième loupe.

5. Procédé selon la revendication 1, dans lequel, lors de l'agrandissement et de l'affichage de la partie du contenu au troisième taux de grossissement, lorsque le premier taux de grossissement et le deuxième taux de grossissement ont des formes de cercles de rayons respectivement de longueurs R1 et R2, et lorsqu'une longueur rectiligne entre un centre de la première loupe et un centre de la deuxième loupe est inférieure à une longueur obtenue en ajoutant la longueur de R1 à la longueur de R2, une partie du contenu incluse dans la zone de chevauchement dans laquelle la première loupe et la deuxième loupe se chevauchent est agrandie et affichée au troisième taux de grossissement.

6. Procédé selon la revendication 1, comprenant :
l'affichage d'une troisième loupe sur l'écran tactile tout en agrandissant et en affichant une partie du contenu incluse dans la troisième loupe au troisième taux de grossissement ; et
la formation de la troisième loupe en amenant la première loupe et la deuxième loupe à se chevaucher complètement.

7. Terminal portable pour agrandir et afficher un contenu, le terminal portable comprenant :
un écran tactile (1000) configuré pour effectuer l'affichage du contenu ;
un organe de commande (200) configuré pour amener l'écran tactile à afficher une première loupe (322) et une deuxième loupe (332), dans lequel une partie (321) du contenu incluse dans la première loupe est agrandie et affichée à un premier taux de grossissement, une partie (331) du contenu incluse dans la deuxième loupe est agrandie et affichée à un deuxième taux de grossissement, et une partie du contenu incluse dans une zone de chevauchement (342) dans laquelle la première loupe et la deuxième loupe se chevauchent est agrandie et affichée à un troisième taux de grossissement qui est différent du premier taux de grossissement et du deuxième taux de grossissement,
**caractérisé en ce que** :
lorsque le contenu correspond à une image animée en cours de reproduction à une première vitesse, l'organe de commande est configuré pour provoquer l'agrandissement et l'affichage de la partie du contenu incluse dans la première loupe à un premier taux de grossissement tout en reproduisant la partie du contenu incluse dans la première loupe à une deuxième vitesse différente de la première vitesse.

8. Terminal portable selon la revendication 7, dans lequel l'écran tactile reçoit une entrée d'un geste d'un utilisateur sur la deuxième loupe, et
l'organe de commande est configuré pour amener la deuxième loupe à chevaucher la première loupe en déplaçant la deuxième loupe en réponse à un geste de l'utilisateur sur la deuxième loupe, et provoquer un agrandissement et un affichage d'une partie du contenu incluse dans la zone de chevauchement dans laquelle la première loupe et la deuxième loupe se chevauchent au troisième taux de grossissement.

9. Terminal portable selon la revendication 7, dans lequel, lorsque l'intégralité de la première loupe et l'intégralité de la deuxième loupe se chevauchent, l'organe de commande est configuré pour amener l'écran tactile à afficher une troisième loupe tout en agrandissant et en affichant une partie du contenu incluse dans la troisième loupe au troisième taux de grossissement.

10. Terminal portable selon la revendication 7, dans lequel l'écran tactile est configuré pour recevoir une entrée d'un geste de l'utilisateur sur la deuxième loupe, et
dans lequel l'organe de commande est configuré pour provoquer l'élimination de la deuxième loupe et de la zone de chevauchement de l'écran tactile en réponse à un geste de l'utilisateur sur la deuxième loupe.

11. Terminal portable selon la revendication 7, dans lequel, lorsque la première loupe et la deuxième loupe ont des formes de cercles respectivement de rayons R1 et R2, et lorsqu'une longueur rectiligne entre un centre de la première loupe et un centre de la deuxième loupe est inférieure à une longueur obtenue en ajoutant le rayon R1 au rayon R2, l'organe de commande est configuré pour provoquer un agrandissement et un affichage d'une partie du contenu incluse dans la zone de chevauchement dans laquelle la première loupe et la deuxième loupe se chevauchent, au troisième taux de grossissement.

12. Terminal portable selon la revendication 7, comprenant :
une troisième loupe pendant l'agrandissement et l'affichage d'une partie du contenu incluse dans la troisième loupe au troisième taux de grossissement ; et
un organe de commande configuré pour provoquer l'agrandissement et l'affichage de la partie du contenu incluse dans la zone de chevauchement dans laquelle la première loupe et la deuxième loupe se chevauchent, au troisième taux de grossissement, en réponse à un geste de l'utilisateur sur la troisième loupe, dans lequel la troisième loupe est formée par le chevauchement complet de la première loupe et de la deuxième loupe.

13. Terminal portable selon la revendication 12, dans lequel le premier taux de grossissement ou le deuxième taux de grossissement est inférieur au troisième taux de grossissement.
